(19)

Europäisches
Patentamt

European
Patent Office

Office européen
des brevets

(11) **EP 2 412 631 B1**

(12) **EUROPEAN PATENT SPECIFICATION**

(45) Date of publication and mention
of the grant of the patent:
**31.10.2018 Bulletin 2018/44**

(51) Int Cl.:
**B64D 13/06** *(2006.01)* **F28D 20/02** *(2006.01)*

(21) Application number: **10197229.7**

(22) Date of filing: **29.12.2010**

(54) **Cooling device for high temperature fluid and cooling method for high temperature fluid.**

Kühlvorrichtung für eine Flüssigkeit mit hoher Temperatur, und Kühlverfahren für eine Flüssigkeit mit hoher Temperatur

Dispositif de refroidissement pour liquide haute température, et procédé de refroidissement pour liquide haute température

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **30.07.2010 KR 20100074259**

(43) Date of publication of application:
**01.02.2012 Bulletin 2012/05**

(73) Proprietor: **Agency For Defense Development Yuseong-gu, Daejeon 305-152 (KR)**

(72) Inventors:
• **Yoo, Young-June**
 **Daejeon (KR)**
• **Lee, Hyung-Ju**
 **Daejeon (KR)**
• **Lee, Jae-Yun**
 **Daejeon (KR)**

• **Park, Geun-Hong**
 **Daejeon (KR)**
• **Jin, Sang-Wook**
 **Daejeon (KR)**
• **Oh, Chang-Mook**
 **Gwangju (KR)**
• **Baek, Nak-Gon**
 **Daejeon (KR)**
• **Min, Seong-Ki**
 **Daejeon (KR)**
• **Lim, Jin-Shik**
 **Daejeon (KR)**

(74) Representative: **AWA Sweden AB Junkersgatan 1 582 35 Linköping (SE)**

(56) References cited:
 **WO-A1-01/26967      US-A- 5 025 642 US-A1- 2006 059 942**

EP 2 412 631 B1

**Description**

BACKGROUND OF THE INVENTION

1. Field of the Invention

The present invention relates to a cooling device operative to cool high temperature fluid, and a cooling method for high temperature fluid.

2. Background of the Invention

Cooling devices, which are employed in flight vehicles, such as aircrafts or the like, may be divided into a vapor cycle type using a refrigerant phase change process, and a cooling machine employing type using an adiabatic expansion effect of engine bleed air.

The cooling machine employing type separately needs a controller for controlling temperature or pressure of supplied vapor (gas) within a specific range according to application (operation) environments, such as speed, altitude, air temperature, air pressure and the like, as disclosed in US 2006/059942 A1. However, the separately employed controller increases a fabricating cost of the cooling device, and also an installation space for the cooling device in a flight vehicle should be ensured.

Therefore, a new cooling device, which does not need a controller separately is considered to address the problems.

SUMMARY OF THE INVENTION

Therefore, an aspect of the detailed description is to provide a cooling device (claim 1) capable of being less affected by external application environments, and a cooling method (claim 9).

To achieve these and other advantages and in accordance with the purpose of the present invention, as embodied and broadly described herein, there is provided a cooling device including a heat exchanger configured such that fluid is introduced therein to be heat-exchanged with a refrigerant, and configured to vaporize the refrigerant by the heat exchange such that the fluid is discharged at temperature close to vaporization temperature of the refrigerant, a compressor connected to the heat exchanger and configured to compress the fluid discharged out of the heat exchanger, a turbine connected to the compressor and configured to expand the fluid compressed in the compressor to lower temperature of the compressed fluid, and a phase change heat exchanger connected to the turbine, storing a phase change material, and configured to cause heat exchange between the phase change material and the fluid discharged out of the turbine so as to control temperature of the discharged fluid.

In accordance with one exemplary embodiment, the heat exchanger may include a main body configured to allow the fluid and the refrigerant to be introduced and discharged therethrough, a refrigerant flow path plate installed within the main body and having a plurality of micro-flow paths for flow of the refrigerant, and a fluid flow path plate having a plurality of micro-flow paths for flow of the fluid, the fluid flow path plate being laminated on the refrigerant flow path plate. The refrigerant discharged out of the heat exchanger may be in a saturated vapor or superheated steam state, and the fluid introduced into the heat exchanger may be air or vapor having temperature higher than vaporization temperature of the refrigerant.

In accordance with another exemplary embodiment, the cooling device may further include a second heat exchanger. The second heat exchanger may be disposed between the compressor and the turbine to perform heat exchange using a second refrigerant, and configured such that the second refrigerant is vaporized to cool the fluid discharged out of the compressor such that the temperature of the fluid introduced into the turbine is close to vaporization temperature of the second refrigerant. An impeller of the compressor and the rotor of the turbine may be supported by the same rotational shaft, and the second heat exchanger may be disposed in parallel to the rotational shaft.

In accordance with another exemplary embodiment, the phase change heat exchanger may include a storage chamber configured to store the phase change material, and a plurality of channels configured to allow introduction and discharge of the fluid and intersect the storage chamber, at least parts of the plurality of channels being in parallel to each other. A storage space of the storage chamber may be defined as a space without a barrier.

To achieve these and other advantages and in accordance with the purpose of the present invention, as embodied and broadly described herein, there is provided a flight vehicle including a flight vehicle main body, an engine mounted in the main body to generate a propulsive force of the main body and configured to heat fluid introduced into the main body, and a cooling device configured to cool the fluid heated by the engine and discharge the cooled fluid towards an object whose temperature is needed to be adjusted.

To achieve these and other advantages and in accordance with the purpose of the present invention, as embodied and broadly described herein, there is provided a cooling method including cooling fluid using vaporization heat of a refrigerant to lower temperature of the fluid to be close to vaporization temperature of the refrigerant, compressing the temperature-lowered fluid using a compressor, expanding the compressed fluid using a turbine, connected to the compressor, to lower temperature of the compressed fluid, and exchanging heat with the fluid discharged out of the turbine, the heat being emitted or absorbed upon the phase change material being phase-changed, thus to maintain a constant temperature of the fluid discharged out of the turbine. At the cooling step, the fluid having temperature higher than the vaporization temperature of the refrigerant may be introduced into a heat exchanger, and the refrigerant may be heat-exchanged with the fluid within the heat exchanger to be in a saturated vapor or superheated steam state.

The foregoing and other objects, features, aspects and advantages of the present invention will become more apparent from the following detailed description of the present invention when taken in conjunction with the accompanying drawings.

BRIEF DESCRIPTION OF THE DRAWINGS

The accompanying drawings, which are included to provide a further understanding of the invention and are incorporated in and constitute a part of this specification, illustrate embodiments of the invention and together with the description serve to explain the principles of the invention.

In the drawings:

FIG. 1 is a schematic view showing a flight vehicle in accordance with one exemplary embodiment;
FIG. 2 is a flowchart showing a cooling method, which is applicable to the flight vehicle of FIG. 1;
FIG. 3 is a schematic view of a cooling device shown in FIG. 1;
FIG. 4A is a perspective view of a heat exchanger shown in FIG. 3;
FIG. 4B is a disassembled view of flow path plates installed in the heat exchanger of FIG. 3;
FIG. 5 is a sectional view of a compressor and a turbine shown in FIG. 3; and
FIG. 6 is a schematic view of a phase change heat exchanger shown in FIG. 3.

DETAILED DESCRIPTION OF THE INVENTION

Description will now be given in detail of a cooling device for high temperature fluid, a flight vehicle having the same and a cooling method for high temperature fluid in accordance with the exemplary embodiments, with reference to the accompanying drawings. For the sake of brief description with reference to the drawings, the same or equivalent components will be provided with the same reference numbers, and description thereof will not be repeated. The expression in the singular form in this specification will cover the expression in the plural form unless otherwise indicated obviously from the context.

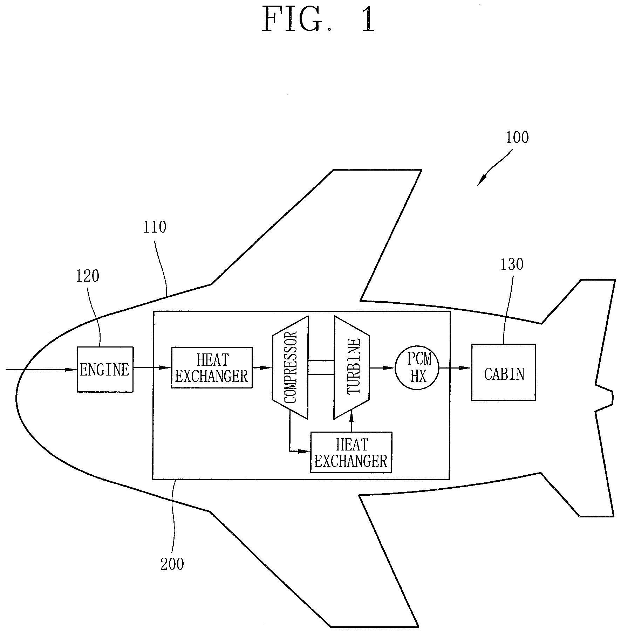

FIG. 1 is a schematic view showing a flight vehicle in accordance with one exemplary embodiment.

A flight vehicle 100 may include, for example, aircraft, missile, rocket and the like, and an aircraft is illustrated in FIG. 1. The aircraft may include a main body 110, an engine 120 and a cooling device 200.

The main body 110 may be formed to suck (absorb) external fluid, for example, external air. The engine 120 may be mounted in the main body 110 not only to generate a propulsive force (thrust) for the main body 110 but also to heat the air introduced in the main body 110.

Since external temperature is extremely low during flight (the external temperature is about 50° below zero upon flying at an altitude of 10 kilometers), a heating device is needed to protect passengers from the low temperature and provide such passengers with a comfortable space. The engine 120 may serve as the heating device.

Extremely hot air heated up in the engine 120 may be cooled by the cooling device 200. The air is cooled down to an appropriate temperature and thereafter introduced into an object (130), for example, a cabin or the like, whose temperature should be controlled.

Ambient environments of the cooling device 200 may drastically change due to flight environments of the flight vehicle. The cooling device 200 related to the detailed description may employ a cooling method, by which high temperature fluid can be cooled down to a predetermined temperature regardless of the changes in the ambient environments.

Hereinafter, description will be given of a cooling method applicable to the cooling device 200.

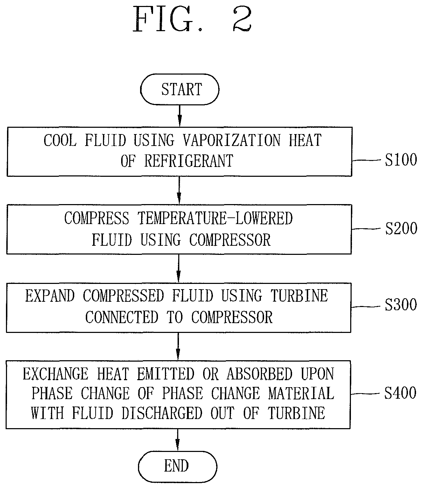

FIG. 2 is a flowchart showing a cooling method, which is applicable to the flight vehicle of FIG. 1.

First, in order for the temperature of fluid to be lowered close to vaporization temperature of a refrigerant, the fluid is cooled by using vaporization heat of the refrigerant (S100).

The fluid may be air or vapor, and introduced into a heat exchanger in a higher temperature state than the vaporization temperature of the refrigerant. The refrigerant is heat-exchanged with the fluid in the heat exchanger to be in a saturated vapor state or a superheated steam state, and the vaporization heat of the refrigerant absorbs heat of the fluid such that the fluid can be less affected by the external environments. Thus, the fluid can always be cooled down to a temperature close to the vaporization temperature of the refrigerant. The heat exchanger may be implemented as an evaporative heat exchanger, for example.

More concretely, the cooling step S100 uses a phenomenon that the temperature of the refrigerant is constantly maintained within a section of the refrigerant being vaporized.

The phenomenon of the refrigerant being vaporized with maintaining a certain temperature presents in a refrigerant flow path side and heat is absorbed in the vapor flow path side due to the refrigerant being vaporized at the constant temperature, thereby lowering the temperature. Since the refrigerant flow path is maintained at the constant temperature, then an outlet temperature of the vapor flow path is less affected by the external application environments.

Afterwards, the temperature-lowered fluid is compressed using a compressor (S200). The compressed fluid is expanded using a turbine connected to the compressor so as to lower the temperature of the compressed fluid (S300). The compressed fluid by the compressor is in a high temperature compressed state and adiabatically expanded by the turbine such that the temperature of the fluid can be decreased.

Finally, in order to maintain a constant temperature of the fluid discharged out of the turbine, heat, which is emitted or absorbed upon a phase change of a phase change material, is exchanged with the fluid discharged out of the turbine (S400).

If the cooling device is in a good operation condition and thus the outlet temperature of the turbine is satisfactorily lowered by virtue of an expansion effect, the phase change material emits accumulated energy as low temperature vapor to be solidified. Here, if the temperature of the vapor is lower than a temperature within a target temperature range, the temperature of the fluid is increased by the energy of the phase change material.

In addition, if the cooling device is not in a good operation condition and thus the outlet temperature of the turbine exceeds the target temperature range, energy contained in the high temperature fluid is delivered to the phase change material, thereby lowering the temperature of the fluid being discharged. That is, the fluid discharged out of the turbine is heat-exchanged with the phase change material, for example, in the phase change exchanger, which allows the temperature of the fluid discharged to be controlled.

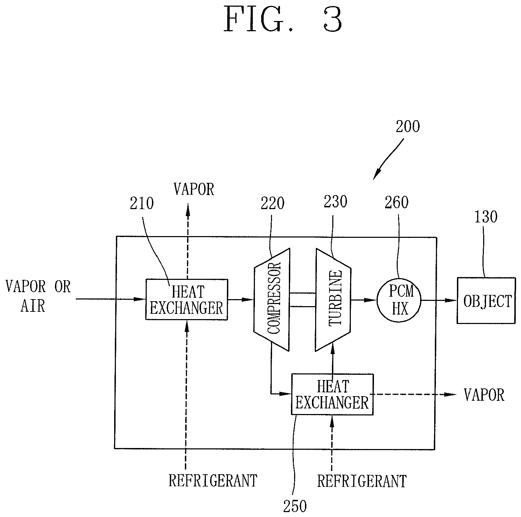

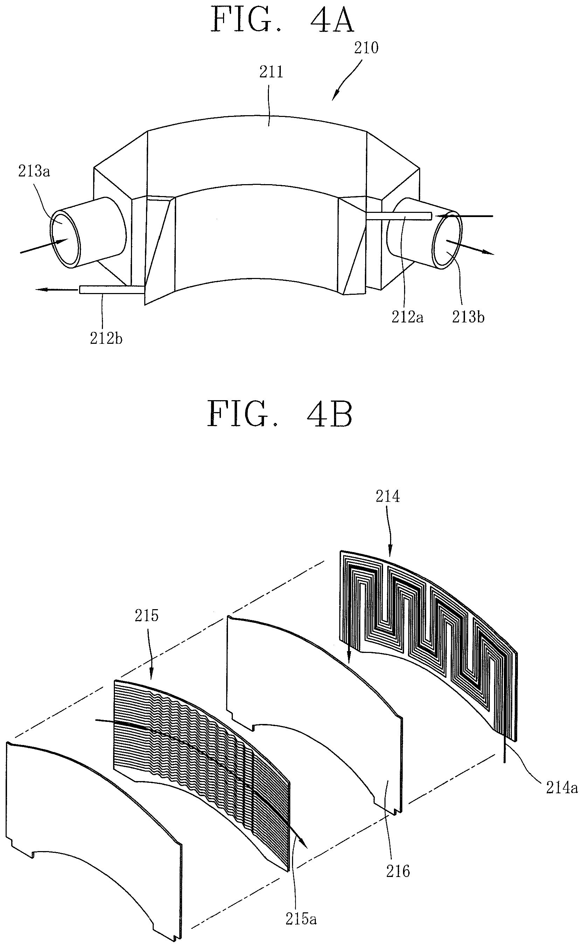

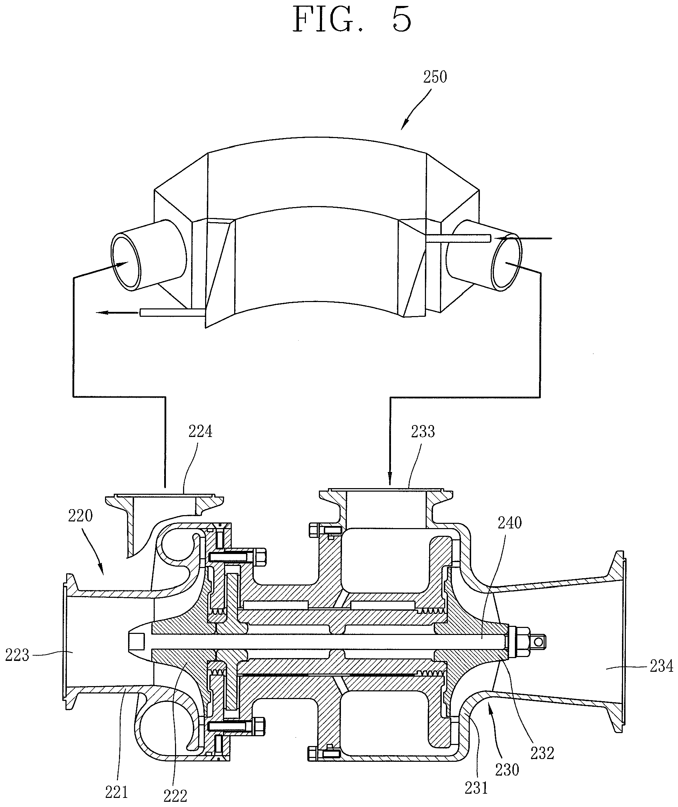

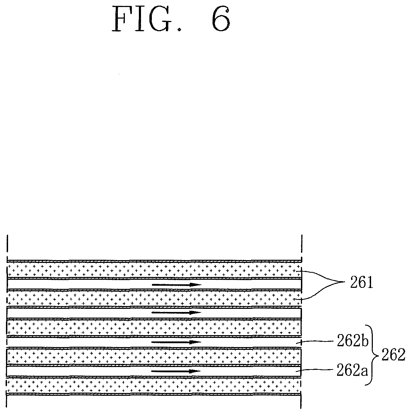

Hereinafter, the cooling device to which the cooling method is applied will be described in more detail with reference to FIGS. 3 to 6. FIG. 3 is a schematic view of a cooling device shown in FIG. 1, FIG. 4A is a perspective view of a heat exchanger shown in FIG. 3, FIG. 4B is a disassembled view of flow path plates installed in the heat exchanger of FIG. 3, FIG. 5 is a sectional view of a compressor and a turbine shown in FIG. 3, and FIG. 6 is a schematic view of a phase change heat exchanger shown in FIG. 3.

Referring to FIG. 3, the cooling device 200 may include a heat exchanger 210, a compressor 220 and a turbine 230.

The heat exchanger 210 may be configured such that fluid is introduced therein to be heat-exchanged with a refrigerant. Also, the heat exchanger 210 may be configured to vaporize the refrigerant so as for the fluid to be discharged at a temperature close to vaporization temperature of the refrigerant.

Referring to FIGS. 4A and 4B, a main body 211 of the heat exchanger 210 may be configured such that the fluid and the refrigerant can be introduced and discharged, respectively.

Especially, the main body 211 may include a low temperature refrigerant inlet 212a for allowing a refrigerant in a low temperature liquid state, stored in a refrigerant storing tank (not shown), to be introduced therein, a high temperature fluid inlet 213a formed at an opposite side to the low temperature refrigerant inlet 212a for supplying high temperature fluid, a low temperature refrigerant outlet 212b formed at an opposite side to the low temperature refrigerant inlet 212a for discharging a refrigerant in a saturated vapor or superheated steam state, and a high temperature fluid outlet 213b for discharging fluid cooled through heat-exchange with the refrigerant in the liquid state.

The refrigerant may be, for example, natural water, cooling water or the like, and the high temperature fluid supplied via the high temperature fluid inlet 213a may be air or vapor having a temperature higher than the vaporization temperature of the refrigerant.

Micro-flow path plates 214 and 215 installed in the main body 211 may include a refrigerant flow path plate 214 through which the refrigerant flows, and a fluid flow path plate 215 through which the high temperature fluid flows. The refrigerant flow path plate 214 and the fluid flow path plate 215 may be alternately laminated by interposing a barrier plate 216 therebetween.

The refrigerant flow path plate 214 may be connected between the low temperature refrigerant inlet 212a and the low temperature refrigerant outlet 212b, and the fluid flow path plate 215 may be connected between the high temperature fluid inlet 213a and the high temperature fluid outlet 213b.

The refrigerant flow path plate 214 may include a plurality of micro-flow paths along which the refrigerant flows, and the fluid flow path plate 215 may include a plurality of micro-flow paths along which the fluid flows. That is, the heat exchanger 210 may be configured in a layered structure of the plurality of micro-flow path plates each having a thickness within several micrometers (mm).

More particularly, the refrigerant flow path plate 214 may be etched to form a plurality of micro-flow paths with predetermined intervals. The refrigerant flows in a direction indicated with an arrow so as to absorb heat transferred from the high temperature fluid.

The fluid flow path plate 215 may be etched to form a plurality of micro-flow paths with predetermined intervals. The fluid flows in a direction indicated with an arrow 215a to be heat-exchanged with the refrigerant, thereby being cooled.

Here, liquid supplied at room temperature absorbs heat from the fluid to be vaporized in the micro-flow paths. Latent heat generated upon vaporization of the liquid is extremely higher than specific heat, so even a less amount of refrigerant can absorb much heat.

As shown, the micro-flow paths of the refrigerant flow path plate 214 may have a labyrinthine or zigzag structure that the micro-flow paths are bent (or curved) at least two times. This form of flow path may serve to prevent a refrigerant in a liquid state, which remains non-vaporized due to inertia, from being discharged through the low temperature refrigerant outlet 212b immediately when accelerating the heat exchanger mounted in the flight vehicle.

Referring to FIGS. 3 and 5, the compressor 220 may be connected to the heat exchanger 210 for compressing the fluid discharged from the heat exchanger 210, and the turbine 230 may be connected to the compressor 220 for expanding the fluid compressed in the compressor 220 so as to lower the temperature of the compressed fluid.

The compressor 220 may serve to compress the fluid introduced into the compressor 220 responsive to a rotation of a rotational shaft 240. The compressor 220 may include a compressor case 221 and an impeller 222.

The compressor case 221 may serve to house the impeller 222 therein, and include a compressor inlet 223 and a compressor outlet 224. The compressor inlet 223 may be formed towards an axial direction of the rotational shaft 240, and the compressor outlet 224 may be formed towards a radial direction of the rotational shaft 240.

The impeller 222 may be mounted to one side of the rotational shaft 240. Accordingly, the impeller 222 may rotate responsive to the rotation of the rotational shaft 240 so as to increase pressure of the fluid introduced into the compressor 220.

The turbine 230 may serve to cool and discharge the fluid from the compressor 220 and also provide a driving force to the rotational shaft 240. That is, the turbine 230 may have a function of discharging the cooled fluid and a function of serving as a driving source of the compressor 220. The compressor 220 may compress the fluid introduced therein using energy generated from the turbine 230 and supply the compressed fluid to a turbine inlet 233.

The turbine 230 may include a turbine case 231 and a rotor 232.

The turbine case 231 may serve to house the rotor 232 therein, and include a turbine inlet 233 and a turbine outlet 234. The turbine inlet 233 may be formed towards the radial direction of the rotational shaft 240, and the turbine outlet 234 may be formed towards the axial direction of the rotational shaft 240.

The rotor 232 may be mounted to another side of the rotational shaft 240, and performs a rotation by pressure difference between the turbine inlet 233 and the turbine outlet 234. The fluid introduced into the turbine 230 may rotate the rotor 232 to generate energy. The fluid flowed through the rotor 232 may be cooled due to expansion, thereby being discharged out through the turbine outlet 234. As shown, the impeller 222, the rotor 232 and the rotational shaft 240 may be secured together so as to rotate at once.

Referring to FIG. 5, a second heat exchanger 250 may be disposed between the compressor 220 and the turbine 230.

The second heat exchanger 250 may be disposed between the compressor 220 and the turbine 230 such that the temperature of the fluid introduced into the turbine 230 can be close to the vaporization temperature of a second refrigerant. The second refrigerant may cool the fluid discharged out of the compressor 220 during vaporization. That is, the second heat exchanger 250 may be an evaporative heat exchanger, which is the same as or similar to the heat exchanger 210 disposed at the front of the compressor 220.

The second heat exchanger 250 may be disposed in parallel to the rotational shaft 240 so as to sufficiently ensure a cooling flow path and achieve a compact cooling device.

The fluid primarily cooled in the heat exchanger 210 increases in temperature and pressure as it undergoes the compression process of the compressor 220. During this process, the fluid consumes the energy generated from the turbine 230. In general, for an adiabatic compression process, an outlet temperature of the compressor 220 will be calculated by the following equation.

【Equation 1】

$$\frac{T_2}{T_1} = \left(\frac{P_2}{P_1}\right)^{\frac{k-1}{k}}$$

Here, assuming that the fluid is air and a compression ratio of the compressor 220 is 2, the outlet temperature of the compressor 220 may be increased 1.22 times higher than the inlet temperature thereof. The second heat exchanger 250 may be disposed at the outlet of the compressor 220 to enhance the efficiency of the cooling device.

Referring to FIGS. 3 and 6, a phase change heat exchanger 260 may be disposed adjacent to the outlet of the turbine 230.

The phase change heat exchanger 260 may store a phase change material. The phase change heat exchanger 260 may be connected to the turbine 230. The phase change heat exchanger 260 may be formed to cause heat-exchange between the phase change material and the fluid discharged out of the turbine 230 so as to control the temperature of the discharged fluid.

In more detail, the phase change heat exchanger 260 may include a storage chamber 261 and a plurality of channels 262a and 262b.

The storage chamber 261 may be formed to store the phase change material therein. The phase change material is a material to absorb or emit energy as its phase changes. When the fluid temperature is higher than a phase change temperature of the material, the phase change material absorbs energy for the phase change from the fluid so as to be phase-changed from solid into liquid, while emitting energy as its phase changes from liquid into solid.

The phase change material may be filled in a storage space of the storage chamber 261. The storage space of the storage chamber 261 is a space without a barrier, which allows the phase change material to be smoothly phase-changed from solid to liquid or vice versa.

The plurality of channels 262a and 262b may allow the fluid to be introduced and discharged therethrough, and intersect the storage chamber 261. The plurality of channels 262a and 262b may be disposed such that at least parts thereof are in parallel to each other. More concretely, a flow path (passage) of the fluid supplied is provided with micro-channels each having a width within several micrometers (mm), and such micro-channels are layered with each other to create a flow path plate 262. Such structure can derive an effective heat transfer and optimize efficiency of the heat exchanger.

The phase change heat exchanger 260 may increase the temperature of the fluid if the fluid discharged out of the turbine 230 is overcooled while lowering the temperature of the fluid if being insufficiently cooled, according to the operation conditions of the cooling device.

Thus, by virtue of employing the evaporative heat exchanger and the phase change heat exchanger using the phase change phenomenon, such as vaporization heat of liquid and melting heat (ambient heat), the cooling device, which is less affected by external operation conditions and is capable of adjusting temperature without a separate controller, can be achieved.

In the cooling device with the configuration, the flight vehicle having the same and the cooling method, even when the performance of the cooling device changes responsive to the changes in the operation environments, the temperature of the fluid discharged out of the cooling device can be constantly maintained by the phase change heat exchanger.

Also, employment of the heat exchanger using vaporization heat can make the temperature of the fluid, which is discharged out of the outlet of the heat exchanger, maintained close to the temperature of the refrigerant being vaporized, resulting in minimizing the influence of the external operation conditions to the cooling device.

The configurations and methods of the cooling device for high temperature fluid, the flight vehicle having the same and the cooling method for the high temperature fluid in the aforesaid embodiments may not be limitedly applied, but such embodiments may be configured by a selective combination of all or part of each embodiment so as to derive many variations.

As the present features may be embodied in several forms without departing from the characteristics thereof, it should also be understood that the above-described embodiments are not limited by any of the details of the foregoing description, unless otherwise specified, but rather should be construed broadly within its scope as defined in the appended claims, and therefore all changes and modifications that fall within the metes and bounds of the claims, or equivalents of such metes and bounds are therefore intended to be embraced by the appended claims.

**Claims**

1. A cooling device comprising:

   a heat exchanger (210) configured such that fluid is introduced therein to be heat-exchanged with a refrigerant, and configured to vaporize the refrigerant by the heat exchange such that the fluid is discharged at temperature close to vaporization temperature of the refrigerant;
   a compressor (220) connected to the heat exchanger (210);
   a turbine (230) connected to the compressor (220) and configured to expand the fluid compressed in the compressor to lower temperature of the compressed fluid; **characterized in that** the compressor is configured to compress the fluid discharged out of the heat exchanger (210) and **in that** the device further comprises
   a phase change heat exchanger (260) connected to the turbine (230), storing a phase change material, and configured to cause heat exchange between the phase change material and the fluid discharged out of the turbine (230) so as to control temperature of the discharged fluid.

2. The device of claim 1, wherein the heat exchanger (210) comprises:

   a main body (211) configured to allow the fluid and the refrigerant to be introduced and discharged therethrough;
   a refrigerant flow path plate (214) installed within the main body (211) and having a plurality of micro-flow paths for flow of the refrigerant; and
   a fluid flow path plate (215) having a plurality of micro-flow paths for flow of the fluid, the fluid flow path plate being laminated on the refrigerant flow path plate.

3. The device of claim 2, wherein the refrigerant discharged out of the heat exchanger (210) is in a saturated vapor or superheated steam state,
   wherein the fluid introduced into the heat exchanger is air or vapor having temperature higher than vaporization temperature of the refrigerant.

4. The device of claim 1, further comprising:

   a second heat exchanger (250) disposed between the compressor (220) and the turbine (230) and configured to perform heat exchange using a second refrigerant,
   wherein the second heat exchanger (250) is configured such that the second refrigerant is vaporized to cool the fluid discharged out of the compressor such that the temperature of the fluid introduced into the turbine is close to vaporization temperature of the second refrigerant.

5. The device of claim 4, wherein an impeller of the compressor and the rotor of the turbine are supported by the same rotational shaft (240), wherein the second heat exchanger (250) is disposed in parallel to the rotational shaft (240).

6. The device of claim 1, wherein the phase change heat exchanger comprises:

a storage chamber (261) configured to store the phase change material; and a plurality of channels (262a, 262b) configured to allow introduction and discharge of the fluid and intersect the storage chamber, at least parts of the plurality of channels being in parallel to each other.

7. The device of claim 6, wherein a storage space of the storage chamber (261) is defined as a space without a barrier.

8. The device of any one of claims 1 to 7, wherein the cooling device is configured to cool the fluid heated by the engine and discharge the cooled fluid towards an object whose temperature is needed to be adjusted in a flight vehicle.

9. A cooling method comprising:

cooling fluid using vaporization heat of a refrigerant to lower temperature of the fluid to be close to vaporization temperature of the refrigerant; compressing the temperature-lowered fluid using a compressor; expanding the compressed fluid using a turbine, connected to the compressor, to lower temperature of the compressed fluid; and exchanging heat with the fluid discharged out of the turbine, the heat being emitted or absorbed upon a phase change material being phase-changed, thus to maintain a constant temperature of the fluid discharged out of the turbine.

10. The method of claim 9, wherein at the cooling step, the fluid is introduced into a heat exchanger, the fluid having temperature higher than the vaporization temperature of the refrigerant, and the refrigerant is heat-exchanged with the fluid within the heat exchanger to be in a saturated vapor or superheated steam state.

11. The method of claim 9, wherein the exchanging heat occurs at a phase change heat exchanger, and the phase change heat exchanger comprises:

a storage chamber configured to store the phase change material; and a plurality of channels configured to allow introduction and discharge of the fluid and intersect the storage chamber, at least parts of the plurality of channels being in parallel to each other.

**Patentansprüche**

1. Kühlvorrichtung umfassend:

einen Wärmetauscher (210), der derart konfiguriert ist, dass Flüssigkeit darin eingeführt wird, um mit einem Kühlmittel Wärme auszutauschen, und konfiguriert ist, das Kühlmittel durch den Wärmeaustausch zu verdampfen, so dass die Flüssigkeit bei einer Temperatur nahe der Verdampfungstemperatur des Kühlmittels ausgegeben wird; einen Kompressor (220), der mit dem Wärmetauscher verbunden ist (210); eine Turbine (230), die mit dem Kompressor verbunden (220) und konfiguriert ist, um die komprimierte Flüssigkeit im Kompressor auf eine niedrigere Temperatur der komprimierten Flüssigkeit zu erweitern; **dadurch gekennzeichnet, dass** der Kompressor konfiguriert ist, die aus dem Wärmetauscher (210) ausgegebene Flüssigkeit zu komprimieren und dass die Vorrichtung ferner umfasst einen Phasenwechsel-Wärmetauscher (260), der mit der Turbine (230) verbunden ist, ein Phasenwechselmaterial speichert und konfiguriert ist, einen Wärmeaustausch zwischen dem Phasenwechselmaterial und der aus der Turbine (230) ausgegebenen Flüssigkeit zu bewirken, um die Temperatur der ausgegebenen Flüssigkeit zu steuern.

2. Vorrichtung nach Anspruch 1, wobei der Wärmetauscher (210) umfasst:

einen Hauptkörper (211), der konfiguriert ist, dass die Flüssigkeit und das Kühlmittel darin eingeführt und ausgegeben werden kann; eine Kühlmittel-Durchflusswegplatte (214), die im Hauptkörper (211) installiert ist und mehrere Mikroflusswege für den Durchfluss des Kühlmittels aufweist; und eine Flüssigkeitsdurchflusswegplatte (215), die mehrere Mikroflusswege für den Durchfluss der Flüssigkeit aufweist, wobei die Kühlmittel-Durchflusswegplatte laminiert ist.

3. Vorrichtung nach Anspruch 2, wobei das aus dem Wärmetauscher (210) ausgegebene Kühlmittel sich in einem gesättigten Dampf- oder Heißdampfzustand befindet,
wobei die Flüssigkeit, die in den Wärmetauscher eingeführt wird, Luft oder Dampf ist, die eine Temperatur höher als die Verdampfungstemperatur des Kühlmittels aufweisen.

**4.** Vorrichtung nach Anspruch 1, ferner umfassend:

einen zweiten Wärmetauscher (250), der zwischen dem Kompressor (220) und der Turbine (230) angeordnet und konfiguriert ist, um einen Wärmeaustausch unter Verwendung eines zweiten Kühlmittels durchzuführen,
wobei der zweite Wärmetauscher (250) derart konfiguriert ist, dass das zweite Kühlmittel verdampft wird, um die aus dem Kompressor ausgegebene Flüssigkeit zu kühlen, so dass die Temperatur der in die Turbine eingeführten Flüssigkeit nahe der Verdampfungstemperatur des zweiten Kühlmittels liegt.

**5.** Vorrichtung nach Anspruch 4, wobei ein Laufrad des Kompressors und der Rotor der Turbine von derselben Drehwelle (240) getragen werden, wobei der zweite Wärmetauscher (250) parallel zur Drehwelle (240) angeordnet ist.

**6.** Vorrichtung nach Anspruch 1, wobei der Phasenwechsel-Wärmetauscher umfasst:

eine Speicherkammer (261), die zum Speichern des Phasenwechselmaterials konfiguriert ist; und
mehrere Kanäle (262a, 262b), die konfiguriert sind, dass sie das Einführen und Abgeben der Flüssigkeit ermöglichen und die Speicherkammer kreuzen, wobei mindestens Teile der mehreren Kanälen parallel zueinander sind.

**7.** Vorrichtung nach Anspruch 6, wobei ein Speicherraum von der Speicherkammer (261) als ein Raum ohne Barriere definiert ist.

**8.** Vorrichtung nach einem der Ansprüche 1 bis 7, wobei die Kühlvorrichtung konfiguriert ist, um die durch den Motor erhitzte Flüssigkeit zu kühlen und die gekühlte Flüssigkeit an ein Objekt abzugeben, dessen Temperatur in einem Luftfahrzeug angepasst werden muss.

**9.** Kühlverfahren umfassend:

Kühlen von Flüssigkeit durch Verwendung von Verdampfungswärme eines Kühlmittels, um die Temperatur der Flüssigkeit so zu senken, dass sie nahe bei der Verdampfungstemperatur des Kühlmittels liegt;
Komprimieren der abgesenkten Flüssigkeitstemperatur unter Verwendung eines Kompressors;
Erweitern der komprimierten Flüssigkeit unter Verwendung einer Turbine, die mit dem Kompressor verbunden ist, um die Temperatur der komprimierten Flüssigkeit zu senken; und
Austauschen von Wärme mit der aus der Turbine ausgegebenen Flüssigkeit, wobei die Wärme auf ein Phasenwechselmaterial phasenverändert abgegeben oder davon absorbiert wird, um so eine konstante Temperatur der aus der Turbine abgegebenen Flüssigkeit aufrechtzuerhalten.

**10.** Verfahren nach Anspruch 9, wobei bei dem Kühlschritt die Flüssigkeit in einen Wärmetauscher eingeführt wird, wobei die Flüssigkeit eine Temperatur aufweist, die höher als die Verdampfungstemperatur des Kühlmittels ist, und das Kühlmittel einem Wärmeaustausch mit der Flüssigkeit innerhalb des Wärmetauschers in einem gesättigten Dampf- oder Heißdampfzustand unterzogen wird.

**11.** Verfahren nach Anspruch 9, wobei der Wärmeaustausch an einem Phasenwechsel-Wärmetauscher erfolgt und der Phasenwechsel-Wärmetauscher umfasst:

eine Speicherkammer, die zum Speichern des Phasenwechselmaterials konfiguriert ist; und
mehrere Kanäle, die konfiguriert sind, dass sie das Einführen und Abgeben der Flüssigkeit ermöglichen und die Speicherkammer kreuzen, wobei mindestens Teile der mehreren Kanälen parallel zueinander sind.

## Revendications

**1.** Dispositif de refroidissement comprenant :

un échangeur de chaleur (210) configuré de telle façon que du liquide est introduit à l'intérieur pour être échangé en chaleur avec un réfrigérant, et configuré pour vaporiser le réfrigérant par l'échange de chaleur de telle façon que le liquide soit déchargé à une température proche de la température de vaporisation du réfrigérant ;
un compresseur (220) connecté à l'échangeur de chaleur (210) ;
une turbine (230) connectée au compresseur (220) et configurée pour dilater le liquide comprimé dans le compresseur pour abaisser la température du liquide comprimé ; **caractérisé en ce que** le compresseur est configuré pour comprimer le liquide déchargé hors de l'échangeur de chaleur (210) et **en ce que** le dispositif comprend en outre un échangeur de chaleur à changement de phase (260) connecté à la turbine (230), stockant un matériau à changement de phase, et configuré pour provoquer l'échange de chaleur entre le matériau de changement de phase et le liquide déchargé hors de la turbine (230) de façon à commander la température du liquide déchargé.

**2.** Dispositif selon la revendication 1, dans lequel l'échangeur de chaleur (210) comprend :

un corps principal (211) configuré pour permettre au liquide et au réfrigérant d'être introduits et déchargé au travers ;
une plaque de trajet d'écoulement de réfrigérant (214) installée à l'intérieur du corps principal et ayant une pluralité de trajets de micro-écoulements pour l'écoulement du réfrigérant ; et
une plaque de trajet d'écoulement de liquide (215) ayant une pluralité de trajets de micro-écoulement pour l'écoulement du liquide, la plaque de trajet d'écoulement de liquide étant laminée sur la plaque de trajet d'écoulement de réfrigérant.

**3.** Dispositif selon la revendication 2, dans lequel le réfrigérant déchargé hors de l'échangeur de chaleur (210) est dans un état de vapeur saturée ou de vapeur surchauffée,
dans lequel le liquide introduit dans l'échangeur de chaleur est de l'air ou de la vapeur ayant une température supérieure à la température de vaporisation du réfrigérant.

**4.** Dispositif selon la revendication 1, comprenant en outre :

un second échangeur de chaleur (250) disposé entre le compresseur (220) et la turbine (230) et configuré pour exécuter l'échange de chaleur en utilisant un second réfrigérant,
dans lequel le second échangeur de chaleur (250) est configuré de telle façon que le second réfrigérant est vaporisé pour refroidir le liquide déchargé hors du compresseur de telle façon que la température du liquide introduit dans la turbine soit proche de la température de vaporisation du second réfrigérant.

**5.** Dispositif selon la revendication 4, dans lequel un rotor du compresseur et le rotor de la turbine sont supportés par le même arbre rotatif (240),
dans lequel le second échangeur de chaleur (250) est disposé parallèle à l'arbre rotatif (240).

**6.** Dispositif selon la revendication 1, dans lequel l'échangeur de chaleur à changement de phase comprend :

une chambre de stockage (261) configurée pour stocker le matériau à changement de phase ; et
une pluralité de canaux (262a, 262b) configurés pour permettre l'introduction et la décharge du liquide et couper la chambre de stockage, au moins des parties de la pluralité de canaux étant parallèles l'une à l'autre.

**7.** Dispositif selon la revendication 6, dans lequel un espace de stockage de la chambre de stockage (261) est défini en tant qu'un espace sans barrière.

**8.** Dispositif selon l'une quelconque des revendications 1 à 7, dans lequel le dispositif de refroidissement est configuré pour refroidir le liquide chauffé par le moteur et décharger le liquide refroidi en direction d'un objet dont la température doit être ajustée dans un aéronef.

**9.** Procédé de refroidissement comprenant :

de refroidir du liquide en utilisant la chaleur de vaporisation d'un réfrigérant pour abaisser la température du liquide de façon à être proche de la température de vaporisation du réfrigérant ;
de comprimer le liquide abaissé en température en utilisant un compresseur ;
de dilater le liquide comprimé en utilisant une turbine, connectée au compresseur, pour abaisser la température du liquide comprimé ; et
échanger la chaleur avec le liquide déchargé hors de la turbine, la chaleur étant émise ou absorbée lorsqu'un matériau à changement de phase a changé de phase,
pour maintenir ainsi une température constante du liquide déchargé hors de la turbine.

**10.** Procédé selon al revendication 9, dans lequel, à l'étape de refroidissement, le liquide est introduit dans un échangeur de chaleur, le liquide ayant une température supérieure à la température de vaporisation du réfrigérant, et le réfrigérant est échangé en chaleur avec le liquide à l'intérieur de l'échangeur de chaleur pour être dans un état de vapeur saturée ou de vapeur surchauffée.

**11.** Procédé selon la revendication 9, dans lequel l'échange de chaleur se produit sur un échangeur de chaleur à changement de phase, et l'échangeur de chaleur à changement de phase comprend :

une chambre de stockage configurée pour stocker le matériau à changement de phase ; et
une pluralité de canaux configurés pour permettre l'introduction et la décharge du liquide et couper la chambre de stockage, au moins des parties de la pluralité de canaux étant parallèles l'une à l'autre.

# FIG. 1

# FIG. 2

START

COOL FLUID USING VAPORIZATION HEAT
OF REFRIGERANT ———— S100

COMPRESS TEMPERATURE-LOWERED
FLUID USING COMPRESSOR ———— S200

EXPAND COMPRESSED FLUID USING TURBINE
CONNECTED TO COMPRESSOR ———— S300

EXCHANGE HEAT EMITTED OR ABSORBED UPON
PHASE CHANGE OF PHASE CHANGE MATERIAL ———— S400
WITH FLUID DISCHARGED OUT OF TURBINE

END

# FIG. 3

# FIG. 4A

# FIG. 4B

## FIG. 5

# FIG. 6

261

262b ⎱
262a ⎰ 262

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2006059942 A1